# EUROPEAN PATENT SPECIFICATION

(11) **EP 0 989 104 B1**
(45) Date of publication and mention of the grant of the patent: **20.08.2003**
(21) Application number: 98122362.1
(22) Date of filing: 25.11.1998
(51) Int. Cl.: C04B 26/02

(54) **Agglomerated material comprising baked clay and method for obtaining the same**
Agglomeriertes Material auf Basis von gebranntem Ton und Verfahren zu dessen Herstellung
Matériau comprenant de l'argile cuite et procédé de son obtention

(30) Priority: 21.09.1998 IT VR980083
(43) Date of publication of application: 29.03.2000
(73) Proprietor: Stone Italiana S.r.l., 37135 Verona (IT); Sannini Impruneta S.p.A., 50023 Impruneta (FI) (IT)
(72) Inventor: Casamonti, Marco, 50012 Bagno a Ripoli (FI) (IT)
(74) Representative: Petraz, Gilberto Luigi

(56) References cited:
- DE-A- 4 101 032
- FR-A- 2 162 253
- US-A- 4 110 499
- DATABASE WPI Section Ch, Week 198240 Derwent Publications Ltd., London, GB; Class A93, AN 1982-84845E XP002125119 & JP 57 140357 A (ONOMICHI KUMIKA KOGYO KK), 30 August 1982 (1982-08-30)

## Description

### TECHNICAL FIELD

The present invention relates to an agglomerated material which is made of a mixture comprising a baked clay starting material, a resin as binder, and an inert filler like quartz sand, said baked clay starting material being in the form of powders, grits or the like and being mixed with the above components.

Furthermore, the present invention relates to an industrial-scale method for obtaining slabs or tiles or blocks made of the agglomerated material according to the invention.

The present invention may be mainly applied to the building field, particularly for the production of floors, coverings or outside and/or inside wall facings.

A further use of the agglomerated material according to the invention generally relates to the furnishing field at large; more particularly said agglomerated material may be advantageously used for the production of kitchen working-plans, table tops, etc..

### PRIOR ART

Agglomerated materials comprising marble and/or granite and/or quartz and/or natural stone and/or silicic sands are well known in the art, their mixing making it possible to obtain an artificial product which is generally used as a material for wall facings, floors and/or coverings.

For instance, Italian patent N°. 181 485 discloses a method for producing synthetic stones or slabs made of an agglomerated material comprising marble and/or sands and/or quartz, or granites, quartzes or sands combined with suitable binding resins, said artificial stones or slabs being generally used in the building field as wall facing and/or covering and/or floors elements.

The use of an artificial agglomerated material is particularly advantageous since it makes it possible to obtain a product which shows suitable and homogeneous granulometry and colour, said features not being generally exhibited by a natural stone.

Besides, said artificial agglomerated materials are generally resistent to atmospheric and/or chemical agents and to friction wear, thing that makes the production of artificial tiles or slabs viable, these being aesthetically and technically better than the tiles and/or slabs made of natural stone materials.

The production method which is disclosed in the above Italian patent involves several operational steps such as crushing the components constituting said agglomerated material, a subsequent mixing of said crushed materials with a hot polymerizable resin, vibrocompressing and vacuum molding of the mixture so obtained in order to produce slabs of a predetermined shape, and a final hardening or hot polymerization of the bonding resin which is contained in said slabs.

According to said method, further polishing and burnishing steps of said slabs are generally carried out as well as cutting to size, chamfering, gauging and countersinking of said slab.

By means of said method, there is found to be achieved a continuous production of slabs made of agglomerated material, whose length, width and thickness are carefully predetermined and fall within very narrow tolerances which are generally not possible using natural stone or stone-like materials.

Generally, said method requires the employment of suitable polymerization catalysts and/or accelerators; furthermore, metallic components such as brass, aluminium, alloys may be introduced into the mixture, said metallic components conferring particularly interesting optical and aesthetical properties onto the slab.

Furthermore, it is possible to introduce one or more colouring agents into the mixture of said agglomerated materials; these have to be compatible with the resin used as binder, and they confer a predetermined final colour to the slabs.

The resin percentage to be used within said mixtures is a very important operational parameter which has to be carefully evaluated and selected.

In fact, in case the amount of resin is too high, the slabs obtained are excessively soft and show a closed cell fabric, thing which does not let out the air which is present within the mixture during the following vibrocompression and vacuum moulding phase.

Conversely, in case the amount of the resin used is too small, the mixture obtained is particularly dry, with a low cohesion and insufficiently mixable during the vibrocompression moulding phase.

Besides, the addition of powders or very fine-grained silicic sand to the mixture is known in order to increase the hardness and the resistance to friction wear of the slabs made of the agglomerated material according to the prior art, said powders or very fine-grained silicic sand being not soaked in resin and behaving as filler so that a reduction in the amount of the resin to be used is advantageously accomplished.

Furthermore, a method for the production of agglomerated material blocks is known in the art.

Once the polymerization stage goes to completion and the agglomerated material has therefore hardened, said blocks are cut into slabs for making tiles for floors and/or coverings and/or wall facings, or for making elements which have been cut to size, e.g. steps, kitchen and bathroom planes, windows-sills.

The use of a high temperature baked-clay based material has been very well-known for centuries in the building field.

Said material is generally known with the common term of "cotto", and it is normally used for making floor tiles and coverings in general.

For the purpose of the present description the term "cotto" indicates a product which is obtained after a clay-baking step, with the possible addition of small percentages of other components, said product being used not only for the production of floors, but also for that of a plurality of other elements such as tiles, bent tiles, bricks, listels, steps, pots and many other objects.

In fact, the product defined as "cotto" exhibits good mechanical properties, e.g. it is shock and compression resistant, it is a very good thermal insulator and further bears sound-proofing properties; moreover it is impermeable, highly fire- and frost-resistant, even in particularly severe climatic conditions.

However, it is known that the "cotto" product is a rather rigid material which is moulded by extrusion, and by means of which it is possible to produce slabs or tiles of a very limited length.

Therefrom it derives that the thickness of said slabs or tiles cannot be lower than some predetermined minimum values in order to avoid that said slabs made of "cotto" product become less flexible and inevitably come to their breaking point.

The same dimensional tolerances, in terms of length, width and thickness, which can be accomplished at a traditional "cotto" material slab production phase, result to be disadvantageously too high, such a thing causing the production of slabs which can be very different from each other, this involving a plurality of drawbacks when they have to be used.

### DESCRIPTION OF THE INVENTION

The present invention aims at overcoming the disadvantages and drawbacks of the prior art, by providing an agglomerated material which consists of a mixture made of a baked clay based starting material, a binder advantageously consisting of a resin, and an inert filler which advantageously consists of a quartz sand, said baked clay raw material being in the form of powders, grits or the like and being mixed to the above cited components, said agglomerated material having mechanical and physical-chemical properties which allow the production of very high quality slabs or tiles or blocks, quality which is much higher than that slabs or tiles or blocks have if they are made of natural "cotto".

The above aim has been accomplished thanks to the features disclosed in the main claim.

The dependent claims outline particularly advantageous embodiments of the invention.

Furthermore, the present invention concerns a method for manufacturing slabs or blocks made of the agglomerated material according to the invention.

Said method is disclosed in claim 5.

The dependent claims outline particularly advantageous embodiments of the method according to the invention.

The agglomerated material according to the present invention consists of a mixture comprising a "cotto" product in the range between 20% and 75% by weight, a binder ranging between 5% and 18% by weight, and quartz sand, the amount of said quartz sand taking up the whole mixture to 100%.

According to a preferred and particularly advantageous embodiment of the invention, the above cited mixture comprises a "cotto" product whose amount ranges between 40% to 60% by weight, a binder ranging between 8% and 10% by weight, and quartz sand, the amount of said quartz sand taking the whole mixture to 100%.

According to the invention, the "cotto" product is used in form of powders, grits and the like; this means that the "cotto" product is suitably crushed before the mixing operation is carried out.

The agglomerated material according to the present invention shows very good physico-mechanical properties and is advantageously flexible, this allowing the production of slabs which are much longer, in the three meter range that is, than natural "cotto" slabs, and than what known in the prior art.

Therefore, said slabs can advantageously be used for the production of floors of particularly large buildings like churches, museums and halls like theatres; furthermore, they can be used to make the top of a table or the working-plan of a kitchen.

In case the slabs produced had predetermined limited dimensions, they could be generally applied to any kind of floors and coverings.

A further and particularly relevant feature deriving from the flexibility of the agglomerated material according to the invention, is the possibility of producing very thin slabs, that is in the centimetre range, which are unconceivable when using a traditional "cotto" product.

Besides, the slabs made of the agglomerated material according to the present invention present very narrow dimensional tolerances with respect to the slabs known in the art, such a thing making a homogeneous and consistent production feasible, increasing the aesthetical value of said slabs and permitting a simpler laying thereof.

Furthermore, said agglomerated material shows a very low water absorption rate, this positively affecting its resistance to freezing of the slabs made of the material according to the invention.

Besides, said material shows a very high maximum tensile stress as well as a very high resistance to abrasion and to particularly acid environments.

A further object of the present invention is that of providing a process for manufacturing slabs of predetermined dimensions and made with the agglomerated material according to the invention.

Said process, which is carried out in an automatic plant where one or more processors control each working step, involves a first natural "cotto" product crushing step, as already mentioned above.

In a second step, the powders or grits deriving from the crushing operation, are mixed with quartz sand, as well as with a suitable binder.

Any suitable resin, advantageously a polyester resin, can be selected as a suitable binder.

In a third step, the mixed product is transferred into a press mould with a predetermined shape, generally a quadrangular shape; the mixture is then vibrocompressed, normally under vacuum conditions, in order to obtain a slab with predetermined thickness and density.

After that, said slab is conveyed into an oven where it is subjected to a predetermined temperature for a predetermined period of time and, thanks to the use of chemical coadjuvants, it is hardened at a temperature and for a length of time which have been previously carefully predetermined.

Then, on leaving the oven, the slab is conveyed to further working stations for possible subsequent polishing and burnishing steps of one or both its larger sides, for having it cut to size according to any desired shape, or for chamfering, gauging, countersinking; the slab is finally conveyed to further possible waxing, drying and/or packaging stations.

According to a particular embodiment of said process, the slabs are not subjected to any polishing or burnishing steps and they are used as raw as they come out of the oven.

The two following non-limiting examples disclose some formulations of the agglomerated material according to the invention, said formulations allowing slabs or tiles to be made of a material according to the present invention and according to the method which has been described.

### EXAMPLE I

| | |
|---|---|
| "Cotto" granulometry from 3 to 6 mm | 37,01% |
| "Cotto" granulometry from 1 to 3 mm | 6,16% |
| Sand granulometry from 0,3 to 0,8 mm | 4,93% |
| Sand granulometry from 0,1 to 0,3 mm | 19,12% |
| Quartz powder (10000 mesh) | 23,75% |
| Unsaturated polyester resin | 8,32% |
| Catalyst | 0,16% |
| Polymerization accelerator | 0,01% |
| Memo | 0,08% |
| Blank colouring TiO ₂ | 0,35% |
| Red colouring RE-30 | 0,01% |
| Gold-yellow colouring 1040 | 0,04% |

wherein the catalyst is peroxide terbutyl perbenzoate, the accelerator is 6% cobalt and memo is xylane and it used for binding the resin to the mixture.

### EXAMPLE II

| | |
|---|---|
| "Cotto" granulometry from 1 to 3 mm | 24,84% |
| "Cotto" granulometry from 0,5 to 1 mm | 9,31% |
| Sand granulometry from 0,3 to 0,8 mm | 9,31% |
| Sand granulometry from 0,1 to 0,3 mm | 18,63% |
| Quartz powder (10000 mesh) | 26,40% |
| Resin | 10,40% |
| Catalyst | 0,2% |
| Polymerization accelerator | 0,01% |
| Memo | 0,1% |
| Blank colouring TiO₂ | 0,56% |
| Red colouring RE-30 | 0,02% |
| Gold-yellow colouring 1040 | 0,15% |

wherein the nomenclature is the same as in Example I.

According to a further embodiment of the present invention, said agglomerated material is produced in the form of blocks; said blocks are subsequently cut into slabs or other suitable shapes according to the specific need.

The invention has been previously described according to some of its preferred embodiments.

However, it is clear that the invention is not limited to said embodiments; for instance, any kind of intrusion, e.g. of metallic, glassy and/or wooden materials can be involved in the production of, as well as dyes can be included in, the agglomerated material according to the invention.

## Claims

1. Agglomerated material, advantageously suitable for the production of slabs or tiles or blocks for floors and/or coverings and/or wall facings, said material consisting of a mixture comprising a baked clay raw product whose amount ranging between 20% and 75% by weight, a binder whose amount ranges from 5% to 15% by weight, and an inert filler, the amount of said inert filler corresponding to that needed for taking up the whole mixture to 100%, said baked clay raw material being mixed with the above components in the form of powders or grits.

2. Agglomerated material according to claim 1, **characterized in that** said baked clay raw product consists of a material defined with the trade name of "cotto".

3. Agglomerated material according to claim 2, **characterized in that** said mixture comprises a "cotto" product whose amount ranges between 40% and 60% by weight, a binder whose amount ranges between 8% and 10%, and an inert filler, whose amount corresponds to that needed to take up the whole mixture to 100%.

4. Agglomerated material according to any of the preceding claims, **characterized in that** said binder is a resin, preferably a polyester resin.

5. Agglomerated material according to anyone of the preceding claims, **characterized in that** said inert filler is quartz sand.

6. Method for the production of tiles or slabs made of an agglomerated material according to any of the preceding claims, **characterized in that** it comprises a first step during which a baked clay raw material is crushed to form powders or grits, a second step during which said powders or grits are mixed with a binder, and with an inert filler, a third step during which the mixture is transferred into a mould and vibrocompressed under vacuum conditions in order to obtain a product having a predetermined shape, thickess and density, and a fourth step during which said product is subjected to a predetermined temperature for a predetermined period of time inside of a oven, in order to obtain a catalytic reaction of said binder and to harden the product.

7. Method according to claim 6, wherein the hardened products are subjected to respective steps of polishing and/or burnishing and/or cutting to size and/or chamfering and/or gauging and/or countersinking.

## Patentansprüche

1. Agglomeriertes Material, vorzugsweise zur Herstellung von Platten oder Fliesen oder Blöcken für Fußböden und/oder Abdeckungen und/oder Wandverkleidungen, wobei das Material aus einer Mischung besteht, welche ein gebranntes Lehm-Rohprodukt aufweist, dessen Menge zwischen 20 und 75 Gewichtsprozent beträgt, aus einem Bindemittel, dessen Menge 5 bis 15 Gewichtsprozent beträgt, und aus einer inerten Füllmasse, wobei die Menge der inerten Füllmasse dem entspricht, was bis zur gesamten Mischung von 100% noch fehlt, wobei das gebrannte Lehm-Rohmaterial mit den obigen Komponenten in der Form von Pulver oder Sand gemischt wird.

2. Agglomeriertes Material nach Anspruch 1, **dadurch gekennzeichnet, dass** das gebrannte Lehm-Rohprodukt aus einem Material besteht, das mit dem Handelsnamen "Cotto" bezeichnet wird.

3. Agglomeriertes Material nach Anspruch 2, **dadurch gekennzeichnet, dass** die Mischung aus einem "Cotto"-Produkt besteht, dessen Menge zwischen 40 und 60 Gewichtsprozent beträgt, ein Bindemittel aufweist, dessen Menge zwischen 8 und 10 Gewichtsprozent aufweist, und eine inerte Füllmasse enthält, deren Menge dem entspricht, was bis zur gesamten Mischung von 100% noch fehlt.

4. Agglomeriertes Material nach einem der vorhergehenden Ansprüche, **dadurch gekennzeichnet, dass** das Bindemittel ein Harz, vorzugsweise ein Polyesterharz, ist.

5. Agglomeriertes Material nach einem der vorhergehenden Ansprüche, **dadurch gekennzeichnet, dass** die inerte Füllmasse Quarzsand ist.

6. Verfahren zur Herstellung von aus einem agglomerierten Material hergestellten Fliesen oder Platten nach einem der vorhergehenden Ansprüche, **dadurch gekennzeichnet, dass** es einen ersten Schritt aufweist, während welchem ein gebranntes Lehm-Rohmaterial gemahlen wird, um Pulver oder Sand zu bilden, einen zweiten Schritt aufweist, während welchem das Pulver oder der Sand mit einem Bindemittel und mit einer inerten Füllmasse gemischt werden, und einen dritten Schritt aufweist, während welchem die Mischung in eine Form befördert und unter Vakuumbedingungen vibrationskomprimiert wird, um ein Produkt zu erhalten, das eine vorgegebene Form, Dicke und Dichte aufweist, und einen vierten Schritt aufweist, während welchem das Produkt einer vorgegebenen Temperatur für eine vorgegebene Zeitdauer im Inneren eines Ofens ausgesetzt wird, um eine katalytische Reaktion des Bindemittels zu erreichen und das Produkt zu härten.

7. Verfahren nach Anspruch 6, wobei die gehärteten Produkte jeweiligen Schritten des Polierens und/oder des Glanzschleifens und/oder des Schneidens auf eine Größe und/oder des Abrundens und/oder des Eichens und/oder des Ausfräsens unterzogen werden.

## Revendications

1. Matériau aggloméré, convenant avantageusement à la production de dalles, de carreaux ou de blocs pour sols et/ou couvertures et/ou parements muraux, ledit matériau se composant d'un mélange comprenant un produit brut en argile cuite dont la quantité est comprise entre 20% et 75% en poids, un liant dont la quantité est comprise entre 5% et 15% en poids et une charge inerte, dont la quantité correspond à celle nécessaire pour combler le mélange jusqu'à 100%, ledit matériau brut en argile cuite étant mélangé avec les composants ci-dessus sous forme de poudre ou gravier.

2. Matériau aggloméré selon la revendication 1, **caractérisé en que** ledit produit brut en argile cuite se compose d'un matériau défini sous l'appellation commerciale 'cotto'.

3. Matériau aggloméré selon la revendication 2, **caractérisé en ce que** ledit mélange comprend un produit 'cotto' dont la quantité est comprise entre 40% et 60% en poids, un liant dont la quantité est comprise entre 8% et 10% en poids et une charge inerte, dont la quantité correspond à celle nécessaire pour combler le mélange jusqu'à 100%.

4. Matériau aggloméré selon l'une quelconque des revendications précédentes, **caractérisé en ce que** ledit liant est une résine, de préférence une résine de polyester.

5. Matériau aggloméré selon l'une quelconque des revendications précédentes, **caractérisé en ce que** la charge inerte est du sable de quartz.

6. Méthode de production de carreaux ou de dalles dans un matériau aggloméré selon l'une quelconque des revendications précédentes, **caractérisé en ce qu'**il comprend une première phase pendant laquelle on concasse un matériau brut en argile cuite pour former des poudres ou des graviers, une seconde phase pendant laquelle lesdites poudres ou lesdits graviers sont mélangés avec un liant, et avec une charge inerte, une troisième phase pendant laquelle le mélange est transféré dans un moule et vibrocomprimé dans des conditions de vide pour obtenir un produit de forme, d'épaisseur et de densité prédéterminées, et une quatrième phase pendant laquelle ledit produit est soumis à une température prédéterminée dans un laps de temps prédéterminé à l'intérieur d'un four, afin de provoquer une réaction catalytique dudit liant et de durcir le produit.

7. Méthode selon la revendication 6, où les produits durcis sont soumis à des phases respectives de polissage et/ou de lustrage et/ou de découpe à des dimensions données et/ou de chanfreinage et/ou de calibrage et/ou de fraisage.
